# EUROPEAN PATENT SPECIFICATION

(11) **EP 3 796 051 B1**
(45) Date of publication and mention of the grant of the patent: **24.06.2026**
(21) Application number: 20189828.5
(22) Date of filing: 06.08.2020
(51) Int. Cl.: G01S 13/72, G01S 13/86, G01V 8/00, G01S 13/88

(54) **PERSONNEL SECURITY INSPECTION METHOD AND PERSONNEL SECURITY INSPECTION SYSTEM**
VERFAHREN ZUR PRÜFUNG DER PERSÖNLICHEN SICHERHEIT UND SYSTEM ZUR PRÜFUNG DER PERSÖNLICHEN SICHERHEIT
PROCÉDÉ ET SYSTÈME D'INSPECTION DE SÉCURITÉ DU PERSONNEL

(30) Priority: 18.09.2019 CN 201910883948
(43) Date of publication of application: 24.03.2021
(73) Proprietor: Nuctech Company Limited, TongFang Building Shuangqinglu Haidian District Beijing 100084 (CN); Tsinghua University, Haidian District, Beijing 100084 (CN)
(72) Inventor: ZHAO, Ziran, Beijing, 100084 (CN); GU, Jianping, Beijing, 100084 (CN); YUAN, Shaoming, Beijing, 100084 (CN); LIU, Peng, Beijing, 100084 (CN); KANG, Xiaohua, Beijing, 100084 (CN); ZHOU, Zhiqiang, Beijing, 100084 (CN); GENG, Xingjie, 100084, 100084 (CN)
(74) Representative: Gunzelmann, Rainer

(56) References cited:
- EP-A1- 2 204 670
- EP-A1- 3 480 776
- CN-A- 109 709 618
- CN-U- 206 975 238
- US-A1- 2005 024 199
- US-A1- 2007 286 460
- TRYON GARY V.: "Millimeter wave case study of operational deployments: retail, airport, military, courthouse, and customs", SPIE SMART STRUCTURES AND MATERIALS + NONDESTRUCTIVE EVALUATION AND HEALTH MONITORING, 2005, SAN DIEGO, CALIFORNIA, UNITED STATES, vol. 6948, 3 April 2008 (2008-04-03), US, pages 694802, XP093022276, ISSN: 0277-786X, ISBN: 978-1-5106-4548-6, DOI: 10.1117/12.768384

## Description

### TECHNICAL FIELD

The present disclosure generally relates to the field of security inspection technology, and particularly to the field of terahertz wave security inspection.

### BACKGROUND

Security inspection has gradually become a trend. However, traditional security inspection methods are too inefficient to meet the needs of general security inspection, especially during peak hours, they will cause serious congestion and affect people's travel. For example, although security gates can detect metal articles carried by people, they require people to pass through one by one, trace detection devices cannot be barrier-free accessible because of the need for sampling, and the hand-touch method is more inefficient and difficult to operate.

Some new technologies such as millimeter wave and terahertz can image body surface with high resolution in real time, which brings great convenience for personnel security inspection. However, these two technologies have their own characteristics and are suitable for different applications. Passive millimeter wave and terahertz can perform long-distance dynamic imaging on pedestrians and carry out security inspection on pedestrians imperceptibly, which can truly achieve non-interventional and non-cooperative security inspection, but the imaging resolution is low and the penetration is not high, so the ability to accurately identify contraband remains to be improved. Active millimeter wave imaging is clear and has higher penetration, but it requires a person to stand as required for short-range imaging, which is an interventional security inspection and not suitable for general use.

EP 2 204 670 A1 concerns an adaptive sensing system, a sensing method and a corresponding computer program product. The adaptive sensing system comprises an optical or infrared camera for generating image information relating to a region of observation, a passive sensor for receiving electromagnetic radiation, an active sensor for emitting and receiving electromagnetic radiation, an image processing unit adapted to detect the presence of human beings and objects other than human beings in the region of observation based on the generated image information and a control unit. In case the presence of a human being is detected, the control unit is adapted to control the passive sensor so as to receive electromagnetic radiation from at least the region where the human being is detected and, in case the presence of an object other than a human being is detected, the control unit is adapted to control the active sensor so as to transmit and receive electromagnetic radiation to and from at least the region where the object is detected.

US 2005/024199 A1 concerns a combined systems user interface for centralized monitoring of a screening checkpoint for passengers and baggage.

Tryon Gary V.: "Millimeter wave case study of operational deployments: retail, airport, military, courthouse, and customs", SPIE Smart Structures and Materials + Nondestructive Evaluation and Health Monitoring, 2005, San Diego, California, United States, vol. 6948, 3 April 2008 (2008-04-03), page 694802, concerns a millimeter wave case study of operational deployments.

### SUMMARY

The present invention concerns a personnel security inspection system according to claim 1 and a personnel security inspection method according to claim 5. Further aspects of the present invention are defined in the dependent claims.

### BRIEF DESCRIPTION OF THE DRAWINGS

Figure 1 schematically shows an arrangement diagram of a personnel security inspection system according to an embodiment of the present disclosure.
Figure 2 schematically shows a re-inspection area according to an embodiment of the present disclosure.
Figure 3 schematically shows identity binding in a security inspection method according to an embodiment of the present disclosure.
Figure 4 schematically shows a working mode of a security inspection system/security inspection method according to an embodiment of the present disclosure.

### DETAILED DESCRIPTION

The present disclosure proposes a personnel security inspection method and system in which a passive security inspection device, being a terahertz and/or millimeter wave device, and an active security inspection device, being a terahertz and/or millimeter wave device, are cooperatively used, wherein most pedestrians will pass without any suspicion after imperceptibly being subjected to inspection of passive millimeter wave and/or terahertz wave inspection device, the speed of pass will not be affected and everyone is subjected to the inspection; when the passive security inspection device being a millimeter and/or terahertz wave inspection device found that there is a suspected contraband on a person, the person carrying the suspected contraband will be guided to an active security inspection device, being a terahertz and/or millimeter wave inspection device, in a re-inspection area to be subjected to a further inspection to verify whether a contraband is carried by the person. The method and system can improve efficiency, find contraband accurately, and also save security personnel. It is very suitable for providing effective security inspection for public transportation, major events, key areas, densely populated areas, and the like.

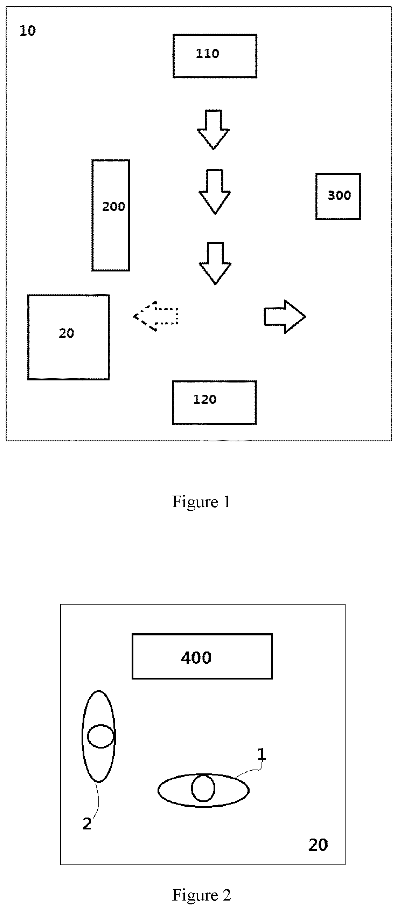

Figure 1 schematically shows a diagram of an application of a personnel security inspection system according to an embodiment of the present disclosure in a security inspection area of a transportation hub such as a subway station, a railway station, an airport and the like, or in a security inspection area of a large assembly, or in a security inspection area of a crowded area. The security inspection area comprises a security inspection passage for a person to pass therethrough and a re-inspection area 20 for further inspection on a suspect.

The personnel security inspection system comprises at least one passive terahertz and/or millimeter wave inspection device 110, 120, an active terahertz and/or millimeter wave inspection device 400, and a data processing system 600 provided at the security inspection site. In an example not encompassed by the wording of the claims, the passive inspection device may be a passive inspection device for other electromagnetic waves, and the active inspection device may be an active inspection device for other electromagnetic waves. Two or more passive terahertz inspection devices and/or passive millimeter wave inspection devices 110, 120 are provided along the security inspection passage, for example, a combination of one passive terahertz inspection device and one passive millimeter wave inspection device, or two passive terahertz inspection devices, etc. In the exemplary embodiment shown in Figure 1, two passive terahertz inspection devices 110, 120 are provided along the security inspection passage. Those skilled in the art should understand that either or both of the passive terahertz inspection devices 110, 120 may also be passive millimeter wave inspection device(s). The passive terahertz inspection devices 110, 120 are provided along the security inspection passage, and configured to acquire terahertz and/or millimeter wave radiation emitted from a person in a crowd traveling through the security inspection passage and to form a passive terahertz and/or millimeter wave real-time dynamic image. The data processing system 600 is configured to determine a suspect carrying a suspected contraband based on the passive terahertz and/or millimeter wave real-time dynamic image.

In the exemplary embodiment shown in Figure 1, the security inspection passage is further provided with an article inspection device 200, which may be, for example, a luggage security inspection machine 200. Those skilled in the art should understand that the present disclosure does not exclude the design of using an inspection device capable of simultaneously inspecting human bodies and articles in the security inspection passage.

In an embodiment, an article can associated with a person, for example, the article is affixed with the same sign, such as a two-dimensional code, as the person carrying the article, so that when the person is determined as a suspect, the article carried by the person will be identified and separated for further inspection. The article inspection may be performed by millimeter wave inspection, or X-ray transmission inspection, and after it is determined that a suspected contraband is carried by the article, an individual inspection or even manual inspection may be conducted. The result of the article inspection can be fed back to the personnel inspection process. For example, when the article inspection device 200 finds that the article contains a suspected contraband, the data processing system 600 of the personnel security inspection system identifies the person to whom the article belongs and determines the person as a suspect, then the personnel security inspection system performs re-inspection on the suspect.

According to embodiments of the present disclosure, the personnel security inspection system can determine the suspect based on the passive terahertz wave imaging result, and then perform re-inspection on the suspect and his article, such as bags and suitcases. According to embodiments of the present disclosure, based on that the article carried by the person, such as bags and suitcases, contains a suspected contraband, the personnel security inspection system can determine the person to whom the article belongs as a suspect, and then perform re-inspection on the suspect and the article carried thereon, such as bags and suitcases.

In the exemplary embodiment shown in Figure 1, a large number of people are arranged in the security inspection passage to pass through the security inspection passage along a certain route (as indicated by solid arrows in Figure 1). The passive terahertz inspection devices 110 and 120 are disposed at positions that do not affect the traveling of the crowd. As shown in Figure 1, the passive terahertz inspection devices 110 and 120 are provided at both ends of the security inspection passage. In an example not encompassed by the wording of the claims, the passive terahertz inspection devices 110 and 120 may also be provided at one end and/or sides and/or other positions of the security inspection passage.

The re-inspection area 20 is arranged at a position where the crowd does not need to pass. For example, as shown in Figure 1, it is arranged at a corner at the end of the security inspection passage where the crowd does not need to pass, so as to prevent the re-inspection area 20 from affecting the traveling of people and reducing inspection efficiency. An active inspection device 400 is placed in the re-inspection area 20 of the security inspection site 10. According to the invention, the active inspection device 400 is an active terahertz inspection device that irradiates a static person with terahertz wave and collect reflected wave to form an active terahertz image so as to perform re-inspection on the suspect, or the active inspection device 400 is an active millimeter wave inspection device that irradiates a static or standing-still person with millimeter wave and collect reflected wave to form an active millimeter wave image so as to perform re-inspection on the suspect. In another embodiment, the active inspection device 400 comprises an active terahertz inspection device and an active millimeter wave inspection device. The data processing system 600 is configured to perform re-inspection on the suspect with active terahertz and/or millimeter wave images.

In the embodiment shown in Figure 1, the passive terahertz inspection devices 110 and 120 perform real-time dynamic imaging on the person entering the security inspection passage, and the person is imperceptibly subjected to the inspection of the terahertz inspection devices. In this process, the articles or luggage carried by the person can be put into an article or luggage inspection machine 200 for luggage inspection.

According to the invention, as shown in Figure 1, the security inspection passage is further provided with a visible light video monitoring device 300. It should be noted that the visible light video monitoring device 300 in Figure 1 is schematically shown for clarity, and its specific position relative to other devices, such as the position relative to the passive inspection devices 110 and 120, is not limited to that shown in Figure 1. For example, the visible light video monitoring device 300 may be provided together with the passive terahertz inspection devices 110, 120 or in the vicinity of the passive terahertz inspection devices 110, 120. In addition, the visible light video monitoring device 300 schematically shown in Figure 1 may comprise one or more visible light video monitoring devices, such as one or more cameras. When the device comprises a plurality of visible light video monitoring devices 300, these visible light video monitoring devices 300 may be arranged at different positions. Those skilled in the art should understand that other auxiliary devices such as cameras, RFID, infrared and the like can be further or alternatively deployed according to the needs and the conditions of the security inspection site, so as to assist in personnel recognition, human-package binding, behavior recognition, etc. through algorithms such as facial recognition, iris, gait analysis, etc.

According to the invention, the data processing system 600 is configured to compare the visible light video with the terahertz and/or millimeter wave image of the suspect carrying the suspected contraband in the passive terahertz and/or millimeter wave real-time dynamic image, so as to determine a visible light image of the suspect and a visible light image of the suspected contraband in the visible light video. With the help of the auxiliary information of the visible light video of the visible light video monitoring device 300, identity binding or association can be performed. In other words, the visible light video monitoring device 300 acquires a visible light video, and the data processing system 600 associates the suspect carrying the suspected contraband in the passive terahertz and/or millimeter wave real-time dynamic image (video) acquired by the passive terahertz inspection device with the corresponding personnel image in the visible light video, for example, determines the suspect in the visible light video according to the comparison between the position of the suspect in the passive terahertz real-time dynamic image and the position of the suspect in the visible light video, or according to the body shape comparison of the suspect.

Identity recognition information of a person can be obtained by facial features in the visible light image of the person in the visible light video, for example, the person's identity information can be obtained through the person's portrait. After the identity information of the suspect is obtained through the visible light video, the terahertz image of the suspect and the terahertz image of the suspected contraband in the passive terahertz and/or millimeter wave real-time dynamic image and the visible light image of the suspect in the visible light video can be associated with or bound to the identity recognition information of the suspect.

The identity recognition information may be a facial image of the suspect obtained from the visible light video, and may also include other associated information obtained based on the facial image of the suspect, such as name and ID number.

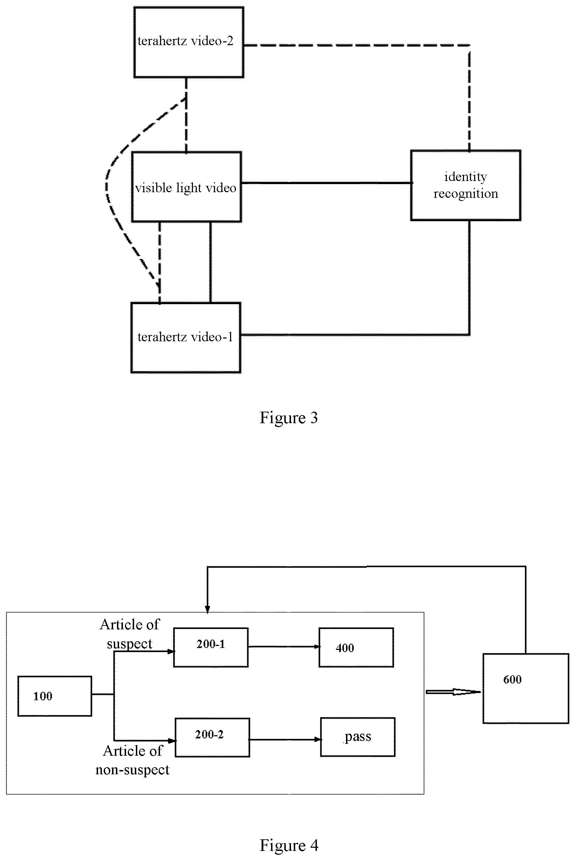

Figure 3 schematically shows an identity binding mode in a security inspection method according to an embodiment of the present disclosure, where a solid line represents the identity binding mode of the personnel security inspection system installed or equipped with only one passive terahertz inspection device 110 or 120, a dotted line plus a solid line represents the identity binding mode of the personnel security inspection system including two passive terahertz inspection devices 110 and 120.

In an embodiment of the personnel security inspection system including one passive terahertz inspection device 110 or 120, the passive terahertz inspection device 110 or 120 obtains a real-time dynamic image of a person on the security inspection passage, that is, a terahertz video-1, and at the same time, the visible light video monitoring device 300 obtains a visible light video of the person on the security inspection passage. The data processing system 600 can compare the visible light video with the terahertz video-1, that is, compare the images in the two videos, for example, locate the suspect in the terahertz video-1 who may carry a contraband, and also locate the image of the suspect in the visible light video, thus associating the terahertz image of the suspect with the visible light image of the suspect. In addition, based on the visible light video, the data processing system 600 can perform face recognition, gait analysis, and the like to obtain the identity recognition information of the person corresponding to the image, thereby determining the identity information of the suspect, etc., thereby distinguishing the person in the crowd in the visible light video. In other embodiments, more identity recognition information can be obtained, and the identity card information of the suspect can be obtained through the face image. In the case of a higher security level, identification and/or association of physiological information, such as fingerprint identification and/or fingerprint association, iris identification and/or iris association, may also be performed. According to this embodiment, the data processing system 600 can correspond/ associate the suspect image in the terahertz video-1 to/with the suspect in the visible light image and bind it to the identity recognition information.

In an embodiment of the personnel security inspection system including two passive terahertz inspection devices 110 and 120 (for example, as shown in Figure 1), the two terahertz inspection devices 110 and 120 simultaneously obtain real-time dynamic images of a person in the security inspection passage, that is, terahertz video-1 and terahertz video-2. Two passive terahertz inspection devices 110 and 120 are installed to obtain passive terahertz images on the front and back of the person, making inspection more comprehensive. The data processing system 600 compares the terahertz video-1 and the terahertz video-2 with the visible light video to perform the identity binding.

When the person in the security inspection passage carries contraband, the images formed by the passive terahertz inspection devices and/or millimeter wave inspection devices 110, 120 include passive terahertz and/or millimeter wave images of the contraband, and the data processing system 600 can thus determine that the person is a suspect carrying a contraband. The passive terahertz and/or millimeter wave image of the person who do not carry a contraband does not display a contraband. According to an embodiment of the present disclosure, in the case of determining the suspect based on the terahertz and/or millimeter wave video, the data processing system 600 may further determine the identity recognition information of the suspect corresponding to the image of the suspect, for example, determine the identity recognition information of the suspect in the manner shown in Figure 3. Specifically, the data processing system 600 of the personnel security inspection system can determine the identity recognition information associated with each person in the visible light video, and can also compare the visible light video with the passive terahertz and/or millimeter wave video, that is, it can associate each person image in the visible light video with the corresponding person image in the terahertz and/or millimeter wave video, so that after the suspect in the passive terahertz and/or millimeter wave video is determined, the identity recognition information of the suspect can be directly obtained.

According to an embodiment of the present disclosure, the passive terahertz inspection device 110, 120 acquires the terahertz and/or millimeter wave radiation emitted from a person in the crowd traveling through the security inspection passage and forms a passive terahertz and/or millimeter wave real-time dynamic image, the visible light video monitoring device 300 obtains a visible light video, and in the case of an infrared light device (in other embodiments), an infrared light video of the person in the crowd traveling through the security inspection passage can also be obtained; the data processing system 600 analyzes the passive terahertz image, the visible light video or the infrared light video (in other examples, not encompassed by the wording of the claims, it may also be a video using other electromagnetic waves). For example, it is possible to perform a multi-modal intelligent fusion for the terahertz, infrared or visible light images, make a model training of the collected data with a detection framework. An intelligent recognition model is applied to the terahertz device, to determine whether there is a suspect image through an intelligent recognition algorithm, and if any, the type, material and location information of the suspected article in the suspect image, thereby obtaining whether the corresponding person carries a contraband, and if any, the type, material and location information of the suspected article. Both the visible light video image and the passive terahertz and/or millimeter wave video image are used to find the suspected article and the suspect, obviously it may also be possible to compare the terahertz and/or millimeter wave video with the visible light video, and naturally, the comparison can be used for identity binding.

According to the invention, the passive terahertz inspection device acquires the terahertz and/or millimeter wave radiation emitted by a person in the crowd traveling through the security inspection passage and forms a passive terahertz and/or millimeter wave real-time dynamic image, the visible light video monitoring device 300 obtains a visible light video, and in the case of an infrared light device, it can also obtain an infrared light video of the person in the crowd traveling through the security inspection passage, and the data processing system 600 analyzes the passive terahertz image, the visible light video and optionally the infrared light video. The data processing system 600 is configured to perform inspection by applying an image training method and an intelligent recognition model.

For example, in an embodiment, the method of applying a multi-modal fusion image training comprises: performing a pixel-level registration of the terahertz image, visible light or infrared camera/image; performing a fusion of the registered images to obtain a multi-modal fusion image, which contains the information of the suspected article detected by the terahertz image, the visible light image information such as visible light face, clothes, shape and the like, or the temperature of the infrared image; collecting enough data to fuse, marking the type, material and location information of the suspected article in the fusion image, sending it to the detection framework for a model training, and obtaining an intelligent detection model; and, in the actual security inspection scene, applying the fusion algorithm and the trained detection model for detection and recognition.

For example, in another embodiment, the method of applying a multi-modal fusion image training includes no fusion before the training, comprising: performing a pixel-level registration of the terahertz, visible light or infrared cameras/images; marking the type and location information of the suspected article in the terahertz image, or marking the type, material and location information of the suspected article in the terahertz and infrared images (terahertz and infrared are combined for detection of material), sending it to the detection framework for a model training, and obtaining an intelligent detection model; binding the terahertz, infrared and visible light images using the comparison of the registered images, performing the identity recognition by using the face, etc., and identifying the suspect with the visible light information when the suspected article is detected in the terahertz; and, in the actual security inspection scene, applying the trained detection model for inspection and recognition.

According to the invention, the data processing system 600 is configured to apply an intelligent recognition model that establishes multiple classifications of suspected contrabands, collects the shape, material and location information of the suspected contraband corresponding to each classification in the passive terahertz and/or millimeter wave real-time dynamic image based on the terahertz and/or millimeter wave image of the suspect in the passive terahertz and/or millimeter wave real-time dynamic image, the visible light image of the suspect, and the terahertz and/or millimeter wave image and visible light image of the suspected contraband, and collects the shape, material and location information of the suspected contraband corresponding to each classification in the active terahertz and/or millimeter wave image for model training, so that the intelligent recognition model can recognize the suspected contraband in the crowd and determine one person in the crowd as the suspect who carries the suspected contraband.

The intelligent recognition model has the learning ability. After training, that is, inputting a large number of terahertz and/or millimeter wave images and visible light images of persons, terahertz and/or millimeter wave images and visible light images of contrabands, and multiple classifications, it established multiple classifications of contrabands and the corresponding relationship between the shape, material and location information of each classified contraband and the each classification, so that after entering new person terahertz and/or millimeter wave images and visible light images, it can automatically obtain the shape, material and location information of the contraband and determine the suspect.

Specifically, for example, the intelligent recognition model includes a first neural network, which includes an input layer and an output layer and related parameters, where the terahertz and/or millimeter wave image of the suspect in the passive terahertz and/or millimeter wave real-time dynamic image, the visible light image of the suspect, and the terahertz and/or millimeter wave image and visible light image of the suspected contraband are used as the input layer, and the shape, material and location information of the suspected contraband are used as the output layer. First, known contraband may be placed in different parts of the person, then the terahertz and/or millimeter wave image of the suspect in the passive terahertz and/or millimeter wave real-time dynamic image and the visible light image of the person carrying the contraband as well as the terahertz and/or millimeter wave image and visible light image of the suspected contraband are input to the input layer, and parameters of the first neural network are determined by combining with the known shape, material and location information of the contraband. The trained first neural network is continuously trained during the inspection process to perform the inspection.

According to the invention, the data processing system 600 of the personnel security inspection system further collects the shape, material and location information of the suspected contraband after re-inspection corresponding to each classification for model training, so that the intelligent recognition model can identify the suspected contraband in the crowd and determine a person in the crowd as the suspect carrying the suspected contraband. During the re-inspection, the information of the millimeter wave image is used to check the suspect, for example, check the type and material of the suspected article carried by the suspect. In the re-inspection, in order to determine the suspected article, the suspect may be requested to show the suspected article, thereby obtaining accurate information of the suspected article. The data processing system 600 collects accurate information of the suspected article to train the intelligent recognition model.

In an embodiment, the personnel security inspection system further comprises an article inspection device 200 that can be used to detect whether the bags, luggage, and other articles carried by the person contain the suspected article. For example, the article inspection device 200 is configured to check whether the article contains a suspected contraband by irradiating the article with rays and collecting transmitted rays for imaging. In this embodiment, the identity binding is performed on the person and the article carried by the person (such as bags, suitcases). For example, a sign such as a two-dimensional code, serial number, personal identity number, name, etc. is attached to the article to form a binding or belonging relationship with the person. When the article is detected at the article inspection deice 200, if a suspected article is found, the person bound to the article is determined as the suspect, and then the suspect is tracked and directed to the active millimeter wave for fine inspection. When the article inspection device 200 does not detect any suspected article, and if the passive (for example, terahertz) inspection device detects that the person carries a suspected article, the suspect is tracked and directed to the active millimeter wave for fine inspection. When the article inspection device 200 does not detect any suspected article, and if the passive (for example, terahertz) inspection device and the active inspection device 400 do not detect a suspected article carried by the person either, the person is released or allowed to pass. In this embodiment, the location of the article inspection device may be as shown in Figure 1. The article inspection device and the passive inspection devices 110, 120 may perform inspection on persons and articles carried by them in parallel.

In an embodiment, as shown in Figure 4, the personnel security inspection system may comprise two article inspection devices 200. The terahertz passive inspection device 100 divides persons into suspects and non-suspects by collecting terahertz electromagnetic waves emitted by the persons. The articles carried by the suspects are placed on the article inspection device 200-1 for inspection, that is, the article inspection device 200-1 emits rays (such as commonly used X-rays) to the article carried by the suspect and collects the rays transmitting the article for imaging. If the article inspection device 200-1 detects that the article of the suspect contains a suspected article, the suspect is located and directed or guided to be subjected to the active inspection of, for example, millimeter waves, and an open-package fine inspection can be performed on the article; if the article inspection device 200-1 detects that the article of the suspect does not contain any suspected article, the suspect is located and directed or guided to be subjected to the active inspection of, for example, millimeter waves. For a non-suspect, if the article inspection device 200-2 finds no suspected article in the article of the non-suspect, the non-suspect may be released or allowed to pass.

According to the embodiments of the present disclosure, the execution order of the relevant steps required for the identity binding of the suspect (such as the comparison of the visible light video with the terahertz and/or millimeter wave video, the acquisition of the identity recognition information based on the visible light video, etc.) and the steps of searching for the suspect image based on the terahertz and/or millimeter wave video can be adjusted or alternated according to the needs of actual applications, without necessarily following a certain order.

It should be noted that identity recognition is a broad concept, and the way to associate a person's image with the passed person belongs to identity recognition. The information about the person used for identity recognition belongs to identity recognition information, including but not limited to face recognition information, gait information, iris information and ID card information. For example, the identity recognition information may also include the suspect's location information (for example, it can be determined by the suspect's location in the visible video image), the suspect's appearance information (for example, the suspect's image obtained from the visible light video and / or the gender, height, clothing and other information obtained from the image; the face recognition information, gait information and the like also belong to the appearance information), and the like. The purpose of performing identity recognition and/or obtaining identity recognition information is to determine and guide the suspect, that is, to determine and guide the suspect by using the identity recognition information of the suspect. For example, when the suspect is found, the system will automatically give an alarm; the alarm methods can be: determine the suspect in the terahertz and visible light video, give the type and location information of the suspected article; use augmented reality to put the alarm information into the real field to determine the suspect and the location of the suspected article on the suspect, such as spotlight focusing on the suspect, infrared indicating the suspect, etc.; or prompt by voice the last 6 digits of the suspect's ID card or other information with unique identification that will not disclose personal privacy. Then, the security inspector can guide the suspect out of the crowd and enter the re-inspection area 20 according to the alarm information, or the suspect himself can also enter the re-inspection area 20 according to the automatic voice prompt or automatic light arrow. Alternatively, a controllable gate exit can be provided, which can prevent the suspect from leaving the security inspection site 10 according to the bound identity recognition information of the suspect, so as to force the suspect to enter the re-inspection area 20 for further security inspection. The above-mentioned alarm, locking, guidance and control of suspects can be used in comparison.

The active terahertz and/or millimeter wave inspection device 400 is provided within the re-inspection area 20, and the suspect needs to be subject to a further inspection by the active terahertz and/or millimeter wave inspection device. The re-inspection area 20, as shown in the top view of Figure 2, includes an active millimeter wave inspection device 400. A suspect 1 cooperates with the security inspection of the active millimeter wave inspection device or the active terahertz inspection device 400 according to the voice and icon prompts of the active millimeter wave inspection device or active terahertz inspection device 400. For example, the suspect may stand according to the icon indication of the active millimeter wave inspection device or active terahertz inspection device 400, and stand still for a period of time (for example, two seconds) to be subjected to the inspection, during which the active millimeter wave inspection device or active terahertz inspection device 400 emits millimeter wave or terahertz wave to scan the human body, and obtains the active millimeter wave or terahertz wave image by detecting the reflected wave. The data processing system 600 (not shown in Figure 2) analyzes the active millimeter wave or terahertz wave image, automatically detects the suspected contraband, and identifies the category, material and location information of the suspected contraband; then the type and location of the suspected contraband are displayed on a display device or prompted by voice. If the active millimeter wave image identifies that the suspected contraband is not really a contraband, the suspect is identified as a person not carrying a contraband and is released or allowed to pass; if the millimeter wave or terahertz wave inspection device 400 further reports the presence of a contraband, the suspect is determined as carrying a contraband.

In actual operation, a security inspector 2 may be arranged to monitor the suspect to take out the suspected article according to the automatic voice prompt of the millimeter wave inspection device 400, or dispose or conduct further inspection on the suspect according to the location of the red alarm suspect box marked on the display device. However, it should be understood that the security inspector is not necessary, and the security inspector is not a composition part of the security inspection system of the present disclosure.

In an embodiment of the present disclosure, the personnel security inspection system may further comprise a controllable gate exit provided on the security inspection site 10, which is configured to prevent the suspect from leaving the security inspection site 10 without permission based on the identity recognition information of the suspect and to allow the non-contraband to leave the security inspection site 10 based on the information determined by the re-inspection area 20 that the suspected contraband is not a contraband.

Advantageous effects of the present disclosure include conducting general inspection of the crowd to find the suspect carrying the suspected contraband by collecting the terahertz radiation or millimeter wave radiation of the crowd without interfering with the traveling of the crowd, and performing fine inspection on a small number of suspects, which avoids spending a lot of time to perform fine inspections on a large number of persons, thus improving the efficiency of security inspection and also ensuring the accuracy of security inspection. In the fine inspection, the millimeter wave device only needs one security inspector for monitoring and assistance, which reduces personnel consumption. Since most people are safe and unsuspected, these people may pass through the security inspection passage without intervention, which will not affect the travelling speed of the crowd or the traveling habits of people, and saves a lot of security inspection workload. A small number of suspected persons are subjected to terahertz initial inspection and then millimeter wave fine inspection, which can greatly improve the reliability of security inspection.

## Claims

1. A personnel security inspection system installed at a security inspection site (10) where security inspection needs to be performed, the personnel security inspection system comprising at least one passive inspection device (110, 120), and a data processing system (600) provided at the security inspection site (10), the security inspection site (10) comprising a security inspection passage that allows a crowd to travel therethrough and a re-inspection area where a re-inspection is performed on a suspect in the crowd,
the passive inspection device (110, 120) is configured to acquire terahertz and/or millimeter wave radiation emitted from a person in the crowd traveling through the security inspection passage and to form a passive terahertz and/or millimeter wave real-time dynamic inspection image of the person;
the re-inspection area (20) is located outside the security inspection passage of the security inspection site (10);
the personnel security inspection system further comprises a visible light video monitoring device (300) provided at the security inspection site (10) and configured to acquire a visible light video of the person in the crowd traveling through the security inspection passage, wherein the data processing system (600) is further configured to compare the visible light video with the terahertz and/or millimeter wave inspection image of the suspect carrying the suspected contraband in the passive terahertz and/or millimeter wave real-time dynamic inspection image, so as to determine a visible light image of the suspect and a visible light image of the suspected contraband in the visible light video;
the data processing system (600) is configured to determine a suspect carrying a suspected contraband based on the passive real-time dynamic inspection image, and to perform re-inspection on the suspect; and
the personnel security inspection system comprises two passive inspection devices (110, 120) provided at two ends of the security inspection passage, respectively, for obtaining images on front and back of the person,
**characterized in that** the system further comprises:
an active inspection device (400) provided within the re-inspection area (20) and configured to emit terahertz and/or millimeter wave toward the static person in the re-inspection area (20) and to form an active terahertz and/or millimeter wave inspection image of the static person;
the re-inspection of the suspect is performed with the active terahertz and/or millimetre wave inspection image;
the data processing system is further configured to apply an intelligent recognition model that establishes a plurality of classifications of suspected contrabands, collects shape, material and location information of the suspected contraband corresponding to each of the classifications in the passive terahertz and/or millimeter wave real-time dynamic inspection image based on the terahertz and/or millimeter wave inspection image of the suspect in the passive terahertz and/or millimeter wave real-time dynamic inspection image, the visible light image of the suspect, and the terahertz and/or millimeter wave inspection image and visible light image of the suspected contraband, and collects the shape, material and location information of the suspected contraband corresponding to each of the classifications in the active terahertz and/or millimeter wave inspection image for model training, so that the intelligent recognition model is capable of recognizing the suspected contraband in the crowd and determining the person in the crowd as the suspect carrying the suspected contraband; and
the data processing system (600) is further configured to collect the shape, material and location information of the suspected contraband corresponding to each of the classifications after the re-inspection for model training, so that the intelligent recognition model is capable of recognizing the suspected contraband in the crowd and determining the person in the crowd as the suspect carrying the suspected contraband.

2. The personnel security inspection system according to claim 1, further comprising at least one of:
an article inspection device (200) configured to check whether an article contains a suspected contraband by irradiating the article with rays for imaging; wherein the person is bound to the article carried thereon, so that the person owning the article is determined as the suspect when the article is detected as containing a suspected contraband; and
a controllable gate exit provided at the security inspection site (10) and configured to prevent the suspect from leaving the security inspection site (10) without permission based on the identity recognition information of the suspect and to allow a non-contraband to leave the security inspection site (10) based on the information determined at the re-inspection area (20) that the suspected contraband is not a contraband.

3. The personnel security inspection system according to claim 2, wherein
the data processing system (600) is further configured to obtain identity recognition information of the suspect based on the visible light image of the suspect, and bind the terahertz and/or millimeter wave inspection image of the suspect in the passive terahertz and/or millimeter wave real-time dynamic inspection image, the visible light image of the suspect and the visible light image of the suspected contraband to the obtained identity recognition information of the suspect.

4. The personnel security inspection system according to claim 1, further comprising a prompt system configured to prompt the suspect to enter the re-inspection area (20) for re-inspection in response to the suspect carrying the suspected contraband being recognized by the intelligent recognition model applied to the data processing system (600);
the active terahertz and/or millimeter wave inspection device is configured to image the suspect carrying the suspected contraband in the re-inspection area (20), recognizes the shape, material and location information of the suspected contraband and applies the intelligent recognition model to determine whether the suspected contraband belongs to the contrabands, and reporting in the form of an image or voice.

5. A personnel security inspection method, comprising:
acquiring, through two passive inspection devices (110, 120) respectively provided at two ends of a security inspection passage, electromagnetic wave radiation emitted from a person in a crowd at a security inspection site (10) and forming a passive real-time dynamic inspection image to determine a suspect carrying a suspected contraband; and
performing re-inspection on the suspect,
wherein the two passive inspection devices (110, 120) are configured to acquire terahertz and/or millimeter wave radiation emitted from the person in the crowd traveling through the security inspection passage and to form a passive terahertz and/or millimeter wave real-time dynamic inspection image of the person;
obtaining a visible light video of the person in the crowd travelling through the security inspection passage; and
comparing the visible light video with the terahertz and/or millimeter wave inspection image of the suspect carrying the suspected contraband in the passive terahertz and/or millimeter wave real-time dynamic inspection image, so as to determine a visible light image of the suspect and a visible light image of the suspected contraband in the visible light video; and
the method being **characterized in that**
the re-inspection is performed by an active inspection device (400) provided within the re-inspection area (20) and configured to emit terahertz and/or millimeter wave toward the static person in the re-inspection area (20) and to form an active terahertz and/or millimeter wave inspection image of the static person;
applying an intelligent recognition model that establishes a plurality of classifications of suspected contrabands,
collecting shape, material and location information of the suspected contraband corresponding to each of the classifications in the passive terahertz and/or millimeter wave real-time dynamic inspection image based on the terahertz and/or millimeter wave inspection image of the suspect in the passive terahertz and/or millimeter wave real-time dynamic image, the visible light image of the suspect, and the terahertz and/or millimeter wave inspection image and visible light image of the suspected contraband,
collecting the shape, material and location information of the suspected contraband corresponding to each of the classifications in the active terahertz and/or millimeter wave inspection image, for training the model, so that the intelligent recognition model is capable of recognizing the suspected contraband in the crowd and determining the person in the crowd as the suspect carrying the suspected contraband,
collecting the shape, material and location information of the suspected contraband corresponding to each of the classifications after the re-inspection, for training the model, so that the intelligent recognition model is capable of recognizing the suspected contraband in the crowd and determining the person in the crowd as the suspect carrying the suspected contraband.

6. The personnel security inspection method according to claim 5, further comprising:
prompting the suspect to enter the re-inspection area (20) to be subjected to the re-inspection based on the suspect carrying the suspected contraband recognized by the intelligent recognition model applied by the data processing system (600);
prompting the suspect to enter the re-inspection area (20) to be subjected to the re-inspection in way of manual prompt, or light prompt with colorful light illumination, or voice broadcasting of the identity recognition information of the suspect.

7. The personnel security inspection method according to claim 5, further comprising:
obtaining identity recognition information of the suspect based on the visible light image of the suspect, and binding the terahertz and/or millimeter wave inspection image of the suspect in the passive terahertz and/or millimeter wave real-time dynamic inspection image, the visible light image of the suspect and the visible light image of the suspected contraband to the obtained identity recognition information of the suspect.

8. The personnel security inspection method according to claim 6, further comprising:
imaging the suspect carrying the suspected contraband in the re-inspection area (20),
recognizing the shape, material and location information of the suspected contraband,
applying the intelligent recognition model to determine whether the suspected contraband belongs to the contrabands, and
reporting in the form of image or voice.

9. The personnel security inspection method according to claim 5, further comprising :
irradiating an article not carried by the crowd with rays and checking whether the article contains a suspected contraband by irradiating with rays and collecting transmitted rays for imaging; and
binding the person to the article carried thereon, so that the person owning the article is determined as the suspect when the article is detected as containing a suspected contraband.

10. The personnel security inspection method according to claim 5, comprising:
providing a controllable gate exit at the security inspection site (10), which is configured to prevent the suspect from leaving the security inspection site (10) without permission based on the identity recognition information of the suspect and to allow a non-contraband to leave the security inspection site (10) based on the information determined within the re-inspection area (20) that the suspected contraband does not belong to the contrabands.

## Patentansprüche

1. Ein Personensicherheitskontrollsystem, das an einem Sicherheitskontrollort (10) installiert ist, an dem eine Sicherheitskontrolle durchgeführt werden muss, wobei das Personensicherheitskontrollsystem mindestens eine passive Kontrollvorrichtung (110, 120) und ein Datenverarbeitungssystem (600), das an dem Sicherheitskontrollort (10) bereitgestellt ist, umfasst, wobei der Sicherheitskontrollort (10) einen Sicherheitskontrolldurchgang, der einer Menschenmenge ermöglicht, sich dadurch hindurchzubewegen, und einen Nachkontrollbereich umfasst, in dem eine Nachkontrolle an einem Verdächtigen in der Menschenmenge durchgeführt wird,
die passive Kontrollvorrichtung (110, 120) dazu konfiguriert ist, Terahertz- und/oder Millimeterwellenstrahlung zu erfassen, die von einer Person in der Menschenmenge emittiert wird, die sich durch den Sicherheitskontrolldurchgang bewegt, und ein passives dynamisches Terahertz- und/oder Millimeterwellen-Echtzeit-Kontrollbild der Person zu bilden;
der Nachkontrollbereich (20) außerhalb des Sicherheitskontrolldurchgangs des Sicherheitskontrollortes (10) angeordnet ist;
das Personensicherheitskontrollsystem ferner eine Sichtlicht-Videoüberwachungsvorrichtung (300) umfasst, die an dem Sicherheitskontrollort (10) bereitgestellt und dazu konfiguriert ist, ein Sichtlichtvideo der Person in der Menschenmenge zu erfassen, die sich durch den Sicherheitskontrolldurchgang bewegt, wobei das Datenverarbeitungssystem (600) ferner dazu konfiguriert ist, das Sichtlichtvideo mit dem Terahertz- und/oder Millimeterwellen-Kontrollbild des Verdächtigen, der den vermuteten verbotenen Gegenstand trägt, in dem passiven dynamischen Terahertz- und/oder Millimeterwellen-Echtzeit-Kontrollbild zu vergleichen, um ein Sichtlichtbild des Verdächtigen und ein Sichtlichtbild des vermuteten verbotenen Gegenstands in dem Sichtlichtvideo zu bestimmen;
das Datenverarbeitungssystem (600) dazu konfiguriert ist, basierend auf dem passiven dynamischen Echtzeit-Kontrollbild einen Verdächtigen zu bestimmen, der einen vermuteten verbotenen Gegenstand trägt, und eine Nachkontrolle an dem Verdächtigen durchzuführen; und
das Personensicherheitskontrollsystem zwei passive Kontrollvorrichtungen (110, 120) umfasst, die jeweils an zwei Enden des Sicherheitskontrolldurchgangs bereitgestellt sind, zum Erhalten von Bildern auf einer Vorder- und Rückseite der Person,
**dadurch gekennzeichnet, dass** das System ferner umfasst:
eine aktive Kontrollvorrichtung (400), die innerhalb des Nachkontrollbereichs (20) bereitgestellt und dazu konfiguriert ist, Terahertz- und/oder Millimeterwellen in Richtung der stationären Person in dem Nachkontrollbereich (20) zu emittieren und ein aktives Terahertz- und/oder Millimeterwellen-Kontrollbild der stationären Person zu bilden;
die Nachkontrolle des Verdächtigen mit dem aktiven Terahertz- und/oder Millimeterwellen-Kontrollbild durchgeführt wird;
das Datenverarbeitungssystem ferner dazu konfiguriert ist, ein intelligentes Erkennungsmodell anzuwenden, das eine Vielzahl von Klassifizierungen von vermuteten verbotenen Gegenständen erstellt, Form-, Material- und Positionsinformationen des vermuteten verbotenen Gegenstands, die jeder der Klassifizierungen entsprechen, in dem passiven dynamischen Terahertz- und/oder Millimeterwellen-Echtzeit-Kontrollbild basierend auf dem Terahertz- und/oder Millimeterwellen-Kontrollbild des Verdächtigen in dem passiven dynamischen Terahertz- und/oder Millimeterwellen-Echtzeit-Kontrollbild, dem Sichtlichtbild des Verdächtigen und dem Terahertz- und/oder Millimeterwellen-Kontrollbild und Sichtlichtbild des vermuteten verbotenen Gegenstands zu sammeln, und die Form-, Material- und Positionsinformationen des vermuteten verbotenen Gegenstands, die jeder der Klassifizierungen entsprechen, in dem aktiven Terahertz- und/oder Millimeterwellen-Kontrollbild zum Modelltraining zu sammeln, sodass das intelligente Erkennungsmodell in der Lage ist, den vermuteten verbotenen Gegenstand in der Menschenmenge zu erkennen und die Person in der Menschenmenge als den Verdächtigen zu bestimmen, der den vermuteten verbotenen Gegenstand trägt; und
das Datenverarbeitungssystem (600) ferner dazu konfiguriert ist, die Form-, Material- und Positionsinformationen des vermuteten verbotenen Gegenstands, die jeder der Klassifizierungen entsprechen, nach der Nachkontrolle zum Modelltraining zu sammeln, sodass das intelligente Erkennungsmodell in der Lage ist, den vermuteten verbotenen Gegenstand in der Menschenmenge zu erkennen und die Person in der Menschenmenge als den Verdächtigen zu bestimmen, der den vermuteten verbotenen Gegenstand trägt.

2. Das Personensicherheitskontrollsystem nach Anspruch 1, ferner umfassend mindestens eines von:
einer Artikelkontrollvorrichtung (200), die dazu konfiguriert ist, zu prüfen, ob ein Artikel einen vermuteten verbotenen Gegenstand enthält, indem der Artikel mit Strahlen zur Bildgebung bestrahlt wird; wobei die Person an den von ihr getragenen Artikel gebunden wird, sodass die Person, der der Artikel gehört, als der Verdächtige bestimmt wird, wenn erfasst wird, dass der Artikel einen vermuteten verbotenen Gegenstand enthält; und
einem steuerbaren Torausgang, der an dem Sicherheitskontrollort (10) bereitgestellt und dazu konfiguriert ist, basierend auf den Identitätserkennungsinformationen des Verdächtigen zu verhindern, dass der Verdächtige den Sicherheitskontrollort (10) ohne Erlaubnis verlässt, und basierend auf den in dem Nachkontrollbereich (20) bestimmten Informationen, dass der vermutete verbotene Gegenstand kein verbotener Gegenstand ist, zu erlauben, dass ein Nicht-Verbotsgegenstand den Sicherheitskontrollort (10) verlässt.

3. Das Personensicherheitskontrollsystem nach Anspruch 2, wobei
das Datenverarbeitungssystem (600) ferner dazu konfiguriert ist, Identitätserkennungsinformationen des Verdächtigen basierend auf dem Sichtlichtbild des Verdächtigen zu erhalten und das Terahertz- und/oder Millimeterwellen-Kontrollbild des Verdächtigen in dem passiven dynamischen Terahertz- und/oder Millimeterwellen-Echtzeit-Kontrollbild, das Sichtlichtbild des Verdächtigen und das Sichtlichtbild des vermuteten verbotenen Gegenstands an die erhaltenen Identitätserkennungsinformationen des Verdächtigen zu binden.

4. Das Personensicherheitskontrollsystem nach Anspruch 1, ferner umfassend ein Aufforderungssystem, das dazu konfiguriert ist, den Verdächtigen aufzufordern, den Nachkontrollbereich (20) zur Nachkontrolle zu betreten, als Reaktion darauf, dass der Verdächtige, der den vermuteten verbotenen Gegenstand trägt, durch das intelligente Erkennungsmodell erkannt wird, das auf das Datenverarbeitungssystem (600) angewendet wird;
die aktive Terahertz- und/oder Millimeterwellen-Kontrollvorrichtung dazu konfiguriert ist, den Verdächtigen, der den vermuteten verbotenen Gegenstand trägt, in dem Nachkontrollbereich (20) abzubilden, die Form-, Material- und Positionsinformationen des vermuteten verbotenen Gegenstands zu erkennen und das intelligente Erkennungsmodell anzuwenden, um zu bestimmen, ob der vermutete verbotene Gegenstand zu den verbotenen Gegenständen gehört, und in Form eines Bildes oder einer Stimme zu berichten.

5. Ein Personensicherheitskontrollverfahren, umfassend:
Erfassen, durch zwei passive Kontrollvorrichtungen (110, 120), die jeweils an zwei Enden eines Sicherheitskontrolldurchgangs bereitgestellt sind, von elektromagnetischer Wellenstrahlung, die von einer Person in einer Menschenmenge an einem Sicherheitskontrollort (10) emittiert wird, und Bilden eines passiven dynamischen Echtzeit-Kontrollbildes, um einen Verdächtigen zu bestimmen, der einen vermuteten verbotenen Gegenstand trägt; und
Durchführen einer Nachkontrolle an dem Verdächtigen,
wobei die zwei passiven Kontrollvorrichtungen (110, 120) dazu konfiguriert sind, Terahertz- und/oder Millimeterwellenstrahlung zu erfassen, die von der Person in der Menschenmenge emittiert wird, die sich durch den Sicherheitskontrolldurchgang bewegt, und ein passives dynamisches Terahertz- und/oder Millimeterwellen-Echtzeit-Kontrollbild der Person zu bilden;
Erhalten eines Sichtlichtvideos der Person in der Menschenmenge, die sich durch den Sicherheitskontrolldurchgang bewegt; und
Vergleichen des Sichtlichtvideos mit dem Terahertz- und/oder Millimeterwellen-Kontrollbild des Verdächtigen, der den vermuteten verbotenen Gegenstand trägt, in dem passiven dynamischen Terahertz- und/oder Millimeterwellen-Echtzeit-Kontrollbild, um ein Sichtlichtbild des Verdächtigen und ein Sichtlichtbild des vermuteten verbotenen Gegenstands in dem Sichtlichtvideo zu bestimmen; und
wobei das Verfahren **dadurch gekennzeichnet ist, dass**
die Nachkontrolle durch eine aktive Kontrollvorrichtung (400) durchgeführt wird, die innerhalb des Nachkontrollbereichs (20) bereitgestellt und dazu konfiguriert ist, Terahertz- und/oder Millimeterwellen in Richtung der stationären Person in dem Nachkontrollbereich (20) zu emittieren und ein aktives Terahertz- und/oder Millimeterwellen-Kontrollbild der stationären Person zu bilden;
Anwenden eines intelligenten Erkennungsmodells, das eine Vielzahl von Klassifizierungen von vermuteten verbotenen Gegenständen erstellt,
Sammeln von Form-, Material- und Positionsinformationen des vermuteten verbotenen Gegenstands, die jeder der Klassifizierungen entsprechen, in dem passiven dynamischen Terahertz- und/oder Millimeterwellen-Echtzeit-Kontrollbild basierend auf dem Terahertz- und/oder Millimeterwellen-Kontrollbild des Verdächtigen in dem passiven dynamischen Terahertz- und/oder Millimeterwellen-Echtzeit-Bild, dem Sichtlichtbild des Verdächtigen und dem Terahertz- und/oder Millimeterwellen-Kontrollbild und Sichtlichtbild des vermuteten verbotenen Gegenstands,
Sammeln der Form-, Material- und Positionsinformationen des vermuteten verbotenen Gegenstands, die jeder der Klassifizierungen entsprechen, in dem aktiven Terahertz- und/oder Millimeterwellen-Kontrollbild, zum Trainieren des Modells, sodass das intelligente Erkennungsmodell in der Lage ist, den vermuteten verbotenen Gegenstand in der Menschenmenge zu erkennen und die Person in der Menschenmenge als den Verdächtigen zu bestimmen, der den vermuteten verbotenen Gegenstand trägt,
Sammeln der Form-, Material- und Positionsinformationen des vermuteten verbotenen Gegenstands, die jeder der Klassifizierungen entsprechen, nach der Nachkontrolle, zum Trainieren des Modells, sodass das intelligente Erkennungsmodell in der Lage ist, den vermuteten verbotenen Gegenstand in der Menschenmenge zu erkennen und die Person in der Menschenmenge als den Verdächtigen zu bestimmen, der den vermuteten verbotenen Gegenstand trägt.

6. Das Personensicherheitskontrollverfahren nach Anspruch 5, ferner umfassend:
Auffordern des Verdächtigen, den Nachkontrollbereich (20) zu betreten, um der Nachkontrolle unterzogen zu werden, basierend auf dem Verdächtigen, der den vermuteten verbotenen Gegenstand trägt und durch das intelligente Erkennungsmodell erkannt wird, das durch das Datenverarbeitungssystem (600) angewendet wird;
Auffordern des Verdächtigen, den Nachkontrollbereich (20) zu betreten, um der Nachkontrolle unterzogen zu werden, mittels manueller Aufforderung oder Lichtaufforderung mit farbiger Lichtbeleuchtung oder Sprachrundsendung der Identitätserkennungsinformationen des Verdächtigen.

7. Das Personensicherheitskontrollverfahren nach Anspruch 5, ferner umfassend:
Erhalten von Identitätserkennungsinformationen des Verdächtigen basierend auf dem Sichtlichtbild des Verdächtigen und Binden des Terahertz- und/oder Millimeterwellen-Kontrollbildes des Verdächtigen in dem passiven dynamischen Terahertz- und/oder Millimeterwellen-Echtzeit-Kontrollbild, des Sichtlichtbildes des Verdächtigen und des Sichtlichtbildes des vermuteten verbotenen Gegenstands an die erhaltenen Identitätserkennungsinformationen des Verdächtigen.

8. Das Personensicherheitskontrollverfahren nach Anspruch 6, ferner umfassend:
Abbilden des Verdächtigen, der den vermuteten verbotenen Gegenstand trägt, in dem Nachkontrollbereich (20),
Erkennen der Form-, Material- und Positionsinformationen des vermuteten verbotenen Gegenstands,
Anwenden des intelligenten Erkennungsmodells, um zu bestimmen, ob der vermutete verbotene Gegenstand zu den verbotenen Gegenständen gehört, und
Berichten in Form eines Bildes oder einer Stimme.

9. Das Personensicherheitskontrollverfahren nach Anspruch 5, ferner umfassend:
Bestrahlen eines Artikels, der nicht von der Menschenmenge getragen wird, mit Strahlen und Prüfen, ob der Artikel einen vermuteten verbotenen Gegenstand enthält, durch Bestrahlen mit Strahlen und Sammeln von durchgelassenen Strahlen zur Bildgebung; und
Binden der Person an den von ihr getragenen Artikel, sodass die Person, der der Artikel gehört, als der Verdächtige bestimmt wird, wenn erfasst wird, dass der Artikel einen vermuteten verbotenen Gegenstand enthält.

10. Das Personensicherheitskontrollverfahren nach Anspruch 5, umfassend:
Bereitstellen eines steuerbaren Torausgangs an dem Sicherheitskontrollort (10), der dazu konfiguriert ist, basierend auf den Identitätserkennungsinformationen des Verdächtigen zu verhindern, dass der Verdächtige den Sicherheitskontrollort (10) ohne Erlaubnis verlässt, und basierend auf den innerhalb des Nachkontrollbereichs (20) bestimmten Informationen, dass der vermutete verbotene Gegenstand nicht zu den verbotenen Gegenständen gehört, zu erlauben, dass ein Nicht-Verbotsgegenstand den Sicherheitskontrollort (10) verlässt.

## Revendications

1. Un système d'inspection de sécurité des personnes installé sur un site d'inspection de sécurité (10) où une inspection de sécurité doit être effectuée, le système d'inspection de sécurité des personnes comprenant au moins un dispositif d'inspection passive (110, 120), et un système de traitement de données (600) prévu sur le site d'inspection de sécurité (10), le site d'inspection de sécurité (10) comprenant un passage d'inspection de sécurité qui permet à une foule de le traverser et une zone de réinspection où une réinspection est effectuée sur un suspect dans la foule,
le dispositif d'inspection passive (110, 120) est configuré pour acquérir un rayonnement térahertz et/ou d'ondes millimétriques émis depuis une personne dans la foule se déplaçant à travers le passage d'inspection de sécurité et pour former une image d'inspection dynamique en temps réel passive térahertz et/ou par ondes millimétriques de la personne ;
la zone de réinspection (20) est située à l'extérieur du passage d'inspection de sécurité du site d'inspection de sécurité (10) ;
le système d'inspection de sécurité des personnes comprend en outre un dispositif de surveillance vidéo en lumière visible (300) prévu sur le site d'inspection de sécurité (10) et configuré pour acquérir une vidéo en lumière visible de la personne dans la foule se déplaçant à travers le passage d'inspection de sécurité, dans lequel le système de traitement de données (600) est en outre configuré pour comparer la vidéo en lumière visible avec l'image d'inspection térahertz et/ou par ondes millimétriques du suspect portant l'objet interdit suspecté dans l'image d'inspection dynamique en temps réel passive térahertz et/ou par ondes millimétriques, de manière à déterminer une image en lumière visible du suspect et une image en lumière visible de l'objet interdit suspecté dans la vidéo en lumière visible ;
le système de traitement de données (600) est configuré pour déterminer un suspect portant un objet interdit suspecté sur la base de l'image d'inspection dynamique en temps réel passive, et pour effectuer une réinspection sur le suspect ; et
le système d'inspection de sécurité des personnes comprend deux dispositifs d'inspection passive (110, 120) prévus respectivement à deux extrémités du passage d'inspection de sécurité, pour obtenir des images à l'avant et à l'arrière de la personne,
**caractérisé en ce que** le système comprend en outre :
un dispositif d'inspection active (400) prévu à l'intérieur de la zone de réinspection (20) et configuré pour émettre des ondes térahertz et/ou millimétriques vers la personne statique dans la zone de réinspection (20) et pour former une image d'inspection active térahertz et/ou par ondes millimétriques de la personne statique ;
la réinspection du suspect est effectuée avec l'image d'inspection active térahertz et/ou par ondes millimétriques ;
le système de traitement de données est en outre configuré pour appliquer un modèle de reconnaissance intelligente qui établit une pluralité de classifications d'objets interdits suspectés, collecte des informations de forme, de matériau et de localisation de l'objet interdit suspecté correspondant à chacune des classifications dans l'image d'inspection dynamique en temps réel passive térahertz et/ou par ondes millimétriques sur la base de l'image d'inspection térahertz et/ou par ondes millimétriques du suspect dans l'image d'inspection dynamique en temps réel passive térahertz et/ou par ondes millimétriques, de l'image en lumière visible du suspect, et de l'image d'inspection térahertz et/ou par ondes millimétriques et de l'image en lumière visible de l'objet interdit suspecté, et collecte les informations de forme, de matériau et de localisation de l'objet interdit suspecté correspondant à chacune des classifications dans l'image d'inspection active térahertz et/ou par ondes millimétriques pour l'entraînement du modèle, de sorte que le modèle de reconnaissance intelligente soit capable de reconnaître l'objet interdit suspecté dans la foule et de déterminer la personne dans la foule comme étant le suspect portant l'objet interdit suspecté ; et
le système de traitement de données (600) est en outre configuré pour collecter les informations de forme, de matériau et de localisation de l'objet interdit suspecté correspondant à chacune des classifications après la réinspection pour l'entraînement du modèle, de sorte que le modèle de reconnaissance intelligente soit capable de reconnaître l'objet interdit suspecté dans la foule et de déterminer la personne dans la foule comme étant le suspect portant l'objet interdit suspecté.

2. Le système d'inspection de sécurité des personnes selon la revendication 1, comprenant en outre au moins l'un parmi :
un dispositif d'inspection d'article (200) configuré pour vérifier si un article contient un objet interdit suspecté en irradiant l'article avec des rayons pour imagerie ; dans lequel la personne est liée à l'article porté sur elle, de sorte que la personne possédant l'article soit déterminée comme étant le suspect lorsque l'article est détecté comme contenant un objet interdit suspecté ; et
une sortie de porte contrôlable prévue sur le site d'inspection de sécurité (10) et configurée pour empêcher le suspect de quitter le site d'inspection de sécurité (10) sans autorisation sur la base des informations de reconnaissance d'identité du suspect et pour permettre à un non-objet interdit de quitter le site d'inspection de sécurité (10) sur la base des informations déterminées dans la zone de réinspection (20) selon lesquelles l'objet interdit suspecté n'est pas un objet interdit.

3. Le système d'inspection de sécurité des personnes selon la revendication 2, dans lequel
le système de traitement de données (600) est en outre configuré pour obtenir des informations de reconnaissance d'identité du suspect sur la base de l'image en lumière visible du suspect, et lier l'image d'inspection térahertz et/ou par ondes millimétriques du suspect dans l'image d'inspection dynamique en temps réel passive térahertz et/ou par ondes millimétriques, l'image en lumière visible du suspect et l'image en lumière visible de l'objet interdit suspecté aux informations de reconnaissance d'identité obtenues du suspect.

4. Le système d'inspection de sécurité des personnes selon la revendication 1, comprenant en outre un système d'invite configuré pour inviter le suspect à entrer dans la zone de réinspection (20) pour une réinspection en réponse à la reconnaissance du suspect portant l'objet interdit suspecté par le modèle de reconnaissance intelligente appliqué au système de traitement de données (600) ;
le dispositif d'inspection active térahertz et/ou par ondes millimétriques est configuré pour imager le suspect portant l'objet interdit suspecté dans la zone de réinspection (20), reconnaît les informations de forme, de matériau et de localisation de l'objet interdit suspecté et applique le modèle de reconnaissance intelligente pour déterminer si l'objet interdit suspecté appartient aux objets interdits, et effectuer un rapport sous la forme d'une image ou d'une voix.

5. Un procédé d'inspection de sécurité des personnes, comprenant :
l'acquisition, par l'intermédiaire de deux dispositifs d'inspection passive (110, 120) prévus respectivement à deux extrémités d'un passage d'inspection de sécurité, d'un rayonnement d'onde électromagnétique émis depuis une personne dans une foule sur un site d'inspection de sécurité (10) et la formation d'une image d'inspection dynamique en temps réel passive pour déterminer un suspect portant un objet interdit suspecté ; et
l'exécution d'une réinspection sur le suspect,
dans lequel les deux dispositifs d'inspection passive (110, 120) sont configurés pour acquérir un rayonnement térahertz et/ou d'ondes millimétriques émis depuis la personne dans la foule se déplaçant à travers le passage d'inspection de sécurité et pour former une image d'inspection dynamique en temps réel passive térahertz et/ou par ondes millimétriques de la personne ;
l'obtention d'une vidéo en lumière visible de la personne dans la foule se déplaçant à travers le passage d'inspection de sécurité ; et
la comparaison de la vidéo en lumière visible avec l'image d'inspection térahertz et/ou par ondes millimétriques du suspect portant l'objet interdit suspecté dans l'image d'inspection dynamique en temps réel passive térahertz et/ou par ondes millimétriques, de manière à déterminer une image en lumière visible du suspect et une image en lumière visible de l'objet interdit suspecté dans la vidéo en lumière visible ; et
le procédé étant **caractérisé en ce que**
la réinspection est effectuée par un dispositif d'inspection active (400) prévu à l'intérieur de la zone de réinspection (20) et configuré pour émettre des ondes térahertz et/ou millimétriques vers la personne statique dans la zone de réinspection (20) et pour former une image d'inspection active térahertz et/ou par ondes millimétriques de la personne statique ;
l'application d'un modèle de reconnaissance intelligente qui établit une pluralité de classifications d'objets interdits suspectés,
la collecte d'informations de forme, de matériau et de localisation de l'objet interdit suspecté correspondant à chacune des classifications dans l'image d'inspection dynamique en temps réel passive térahertz et/ou par ondes millimétriques sur la base de l'image d'inspection térahertz et/ou par ondes millimétriques du suspect dans l'image dynamique en temps réel passive térahertz et/ou par ondes millimétriques, de l'image en lumière visible du suspect, et de l'image d'inspection térahertz et/ou par ondes millimétriques et de l'image en lumière visible de l'objet interdit suspecté,
la collecte des informations de forme, de matériau et de localisation de l'objet interdit suspecté correspondant à chacune des classifications dans l'image d'inspection active térahertz et/ou par ondes millimétriques, pour entraîner le modèle, de sorte que le modèle de reconnaissance intelligente soit capable de reconnaître l'objet interdit suspecté dans la foule et de déterminer la personne dans la foule comme étant le suspect portant l'objet interdit suspecté,
la collecte des informations de forme, de matériau et de localisation de l'objet interdit suspecté correspondant à chacune des classifications après la réinspection, pour entraîner le modèle, de sorte que le modèle de reconnaissance intelligente soit capable de reconnaître l'objet interdit suspecté dans la foule et de déterminer la personne dans la foule comme étant le suspect portant l'objet interdit suspecté.

6. Le procédé d'inspection de sécurité des personnes selon la revendication 5, comprenant en outre :
l'invitation du suspect à entrer dans la zone de réinspection (20) pour être soumis à la réinspection sur la base du suspect portant l'objet interdit suspecté reconnu par le modèle de reconnaissance intelligente appliqué par le système de traitement de données (600) ;
l'invitation du suspect à entrer dans la zone de réinspection (20) pour être soumis à la réinspection par une invite manuelle, ou une invite lumineuse avec illumination par lumière colorée, ou une diffusion vocale des informations de reconnaissance d'identité du suspect.

7. Le procédé d'inspection de sécurité des personnes selon la revendication 5, comprenant en outre :
l'obtention d'informations de reconnaissance d'identité du suspect sur la base de l'image en lumière visible du suspect, et la liaison de l'image d'inspection térahertz et/ou par ondes millimétriques du suspect dans l'image d'inspection dynamique en temps réel passive térahertz et/ou par ondes millimétriques, de l'image en lumière visible du suspect et de l'image en lumière visible de l'objet interdit suspecté aux informations de reconnaissance d'identité obtenues du suspect.

8. Le procédé d'inspection de sécurité des personnes selon la revendication 6, comprenant en outre :
l'imagerie du suspect portant l'objet interdit suspecté dans la zone de réinspection (20),
la reconnaissance des informations de forme, de matériau et de localisation de l'objet interdit suspecté,
l'application du modèle de reconnaissance intelligente pour déterminer si l'objet interdit suspecté appartient aux objets interdits, et
l'exécution d'un rapport sous la forme d'image ou de voix.

9. Le procédé d'inspection de sécurité des personnes selon la revendication 5, comprenant en outre :
l'irradiation d'un article non porté par la foule avec des rayons et la vérification si l'article contient un objet interdit suspecté par irradiation avec des rayons et collecte de rayons transmis pour imagerie ; et
la liaison de la personne à l'article porté sur elle, de sorte que la personne possédant l'article soit déterminée comme étant le suspect lorsque l'article est détecté comme contenant un objet interdit suspecté.

10. Le procédé d'inspection de sécurité des personnes selon la revendication 5, comprenant :
la fourniture d'une sortie de porte contrôlable sur le site d'inspection de sécurité (10), qui est configurée pour empêcher le suspect de quitter le site d'inspection de sécurité (10) sans autorisation sur la base des informations de reconnaissance d'identité du suspect et pour permettre à un non-objet interdit de quitter le site d'inspection de sécurité (10) sur la base des informations déterminées à l'intérieur de la zone de réinspection (20) selon lesquelles l'objet interdit suspecté n'appartient pas aux objets interdits.
